Europäisches Patentamt

**European Patent Office**

**Office européen des brevets**

(11) Numéro de publication: **0 117 824**
**A1**

(12) **DEMANDE DE BREVET EUROPEEN**

(21) Numéro de dépôt: **84420012.1**

(22) Date de dépôt: **31.01.84**

(51) Int. Cl.³: **D 06 F 37/20,** F 16 F 7/08

(30) Priorité: **31.01.83 FR 8301899**

(71) Demandeur: **Martinez, Mathias Georges, 104, avenue Debourg, F-69007 Lyon (FR)**

(43) Date de publication de la demande: **05.09.84 Bulletin 84/36**

(72) Inventeur: **Martinez, Mathias Georges, 104, avenue Debourg, F-69007 Lyon (FR)**

(74) Mandataire: **Maureau, Philippe, Cabinet Germain & Maureau Le Britannia - Tour C 20, bld Eugène Déruelle, F-69392 Lyon Cédex 03 (FR)**

(84) Etats contractants désignés: **AT BE CH DE FR GB IT LI LU NL SE**

(54) **Système de support et d'amortissement des mouvements d'une pièce ou d'une machine.**

(57) Ce système comprend au moins un élément (14) solidaire du châssis ou de la pièce à supporter, comportant au moins une face (15) profilée en creux située sensiblement dans le plan dans lequel la pièce est susceptible de se déplacer, sur laquelle est en appui élastique un organe (18) solidaire, respectivement, de la pièce ou du châssis, la force d'appui de cet organe dans la surface en creux étant sensiblement perpendiculaire à la direction dans laquelle la pièce est susceptible de se déplacer par rapport au châssis.

Application à l'équipement de machines à laver et à essorer le linge.

ACTORUM AG

0117824

1

## "Système de support et d'amortissement des mouvements
d'une pièce ou d'une machine"

La présente invention a pour objet un système de support et d'amortissement des mouvements d'une pièce ou d'une machine.

Le montage avec amortissement de certaines pièces mobiles sur un support est complexe à réaliser, car nécessitant des organes supports et des organes d'amortissement indépendants les uns des autres. Le mouvement d'amortissement est généralement justifié pour minimiser le risque de déséquilibre qui pourrait intervenir sous l'effet d'une charge exercée sur la pièce, ou lors du déplacement de celle-ci sur un sol présentant des irrégularités.

C'est ainsi que, dans le cas d'un chariot, dont la charge ne doit pas subir de vibrations importantes, chaque roulette ou roue est montée sur un support, lui-même fixé au châssis du chariot avec interposition d'un amortisseur à ressort, susceptible d'absorber les irrégularités du sol pour éviter de trop fortes vibrations au niveau de la charge. Il en est de même dans le cas des véhicules automobiles.

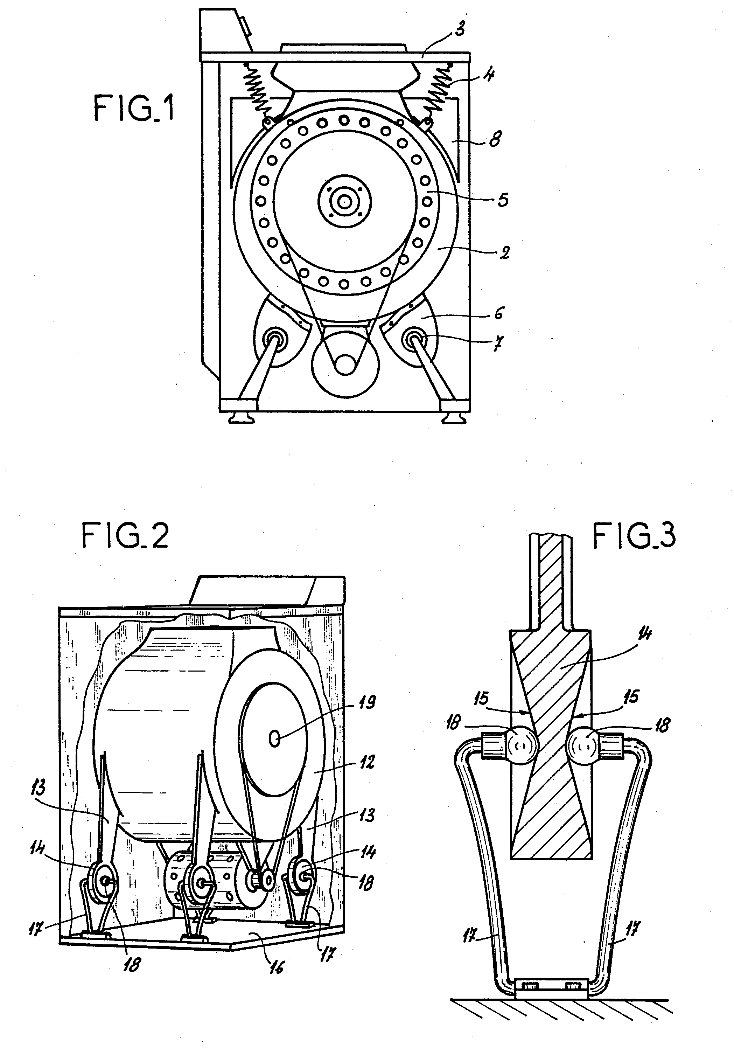

Une autre application nécessitant un montage avec amortissement est celle concernant les machines à laver et à essorer le linge. Comme montré à la figure 1 du dessin schématique annexé, la cuve (2) d'une machine à laver est suspendue à la partie supérieure du châssis (3) de celle-ci à l'aide de ressorts hélicoïdaux (4). Ces ressorts visent à amortir le déséquilibre se produisant lors de la rotation du tambour (5) et du mouvement du linge à l'intérieur de celui-ci. Néanmoins, il est indispensable, notamment en période d'essorage, où le déséquilibre est le plus important, d'améliorer l'amortissement par la friction de patins (6) solidaires de la partie inférieure de la cuve dans des garnitures (7) solidaires du châssis, et par le montage d'éléments de lestage (8) renforçant la stabilité de celle-ci.

Il en résulte une structure complexe, et par suite coûteuse, tant en ce qui concerne la fourniture des différents composants que la main-d'oeuvre pour le montage de ceux-ci. Le poids dû aux éléments de lestage, constitue également un handicap important pour le transport de l'appareil.

En outre, ces différents facteurs rendent difficile une intervention importante lors d'un dépannage chez le client, de telle sorte que les réparations sérieuses nécessitent le retour de l'appareil en atelier avec les frais que cela entraîne.

La présente invention vise à remédier à ces inconvénients.

A cet effet, dans le système qu'elle concerne du type comprenant au moins un élément solidaire de la pièce à supporter ou destiné à supporter ladite pièce, comportant au moins une face profilée en creux située sensiblement dans le plan dans lequel la pièce est susceptible de se déplacer, sur laquelle est en appui élastique un organe solidaire, respectivement, de la pièce ou du châssis, la force d'appui de cet organe dans la surface en creux étant sensiblement perpendiculaire à la direction dans laquelle la pièce est suceptible de se déplacer par rapport au châssis, chaque face d'appui d'un organe poussé élastiquement est constituée par une surface conique ou une portion de surface conique.

En position d'équilibre, l'organe d'appui se trouve dans le fond de la partie en creux de la face profilée qui lui est associée. Lors d'un mouvement de la pièce, il se produit un déplacement relatif de l'organe d'appui et de la face profilée, avec rappel élastique dans la position d'équilibre indiquée précédemment.

Avantageusement, dans ce cas, les organes de pression constituent les extrémités d'un élément élastique en forme d'étrier, tel qu'un fil ou une lame ressort.

En fonction des applications envisagées, les deux faces en creux de chaque élément d'appui peuvent être plus ou moins rapprochées l'une de l'autre, ou totalement indépendantes et ménagées dans des éléments séparés.

Conformément à une possibilité, chaque face en creux ménagée dans un élément d'appui est circulaire, et délimitée par une surface conique.

Une telle solution convient particulièrement bien à l'amortissement d'un mouvement circulaire. Elle est également parfaitement adaptée à la réalisation de roulettes, chaque élément formant lui-même une roulette présentant deux faces en creux dans ses deux parois opposées, cette roulette étant montée sur un chariot par exemple, par l'intermédiaire d'un étrier élastique dont les deux extrémités forment les organes de pression venant prendre appui contre les deux faces en creux de l'élément circulaire.

Avantageusement, chaque face en creux d'un élément d'appui, quelle que soit la forme de celui-ci, est limitée sur tout ou partie de sa périphérie par un rebord fixe ou amovible évitant que, sous l'effet d'une contrainte supérieure aux contraintes de valeur acceptable, les organes de pression échappent à la partie en creux de l'élément d'appui.

Dans la mesure où le mouvement à amortir ne correspond qu'à une direction, par exemple verticale, l'évidement de chaque élément d'appui est ménagé selon une piste rectiligne.

Conformément à une possibilité dans ce cas, les pentes de la piste respectivement au-dessus et au-dessous du point le plus en creux correspondant au point d'équilibre, possèdent des inclinaisons différentes, la pente de la zone située au-dessus de ce point étant plus inclinée par rapport à la verticale que la pente de la zone située au-dessous de celui-ci.

Un tel agencement est très intéressant pour l'équipement des machines à laver et à essorer le linge.

Avantageusement, la cuve est équipée, à sa partie inférieure, d'au moins trois pattes tournées vers le bas dont chacune porte, à son extrémité inférieure, un élément d'appui possèdant deux évidements débouchant dans ses deux faces opposées qui sont situées dans des plans sensiblement perpendiculaires à l'axe de rotation du tambour, servant à l'appui de deux organes de pression coaxiaux et parallèles à l'axe du tambour, solidaires de la partie inférieure du châssis.

Ce système est très intéressant puisque jouant à la fois le rôle de support de la cuve et d'amortissement des mouvements de celle-ci. Compte tenu de son efficacité, ce support remplace à la fois les ressorts de suspension supérieurs, et les éléments de freinage inférieurs, et évite d'avoir recours à un lest d'équilibrage de la cuve.

Les avantages résultant de cette disposition sont importants. C'est ainsi que la diminution du nombre de composants et la diminution de la main-d'oeuvre préalablement nécessaire au montage de certains composants se traduit par un abaissement sensible du prix de revient de la machine à laver.

La diminution de poids due à l'absence d'éléments de lestage facilite considérablement les diverses manutentions nécessaires, et permet des interventions plus aisées chez le client évitant le retour de la machine en atelier.

C'est ainsi qu'après avoir dégagé la cuve des éléments de supports et de suspension avant, il est possible de faire basculer l'ensemble des pièces vers l'arrière, ce qui permet un accès facile à celles-ci, en vue de la réparation de la cuve, du moteur, de la pompe de vidange, etc...

Il faut également noter que, dans le cas d'une machine à laver à encastrer, il est possible de monter la cuve directement sur un socle sans qu'il soit nécessaire d'utiliser un châssis, comme tel est le cas actuellement, lorsque la cuve est suspendue. La trappe d'accès au tambour est montée directement sur la cuve, de même que les tubulures de remplissage en produit de lavage, ou de rinçage. Le tableau de commande peut être monté directement sur la cuve ou être placé à distance.

Selon une forme préférée d'exécution, chaque paire d'organes de pression est constituée par les extrémités d'un élément élastique en forme d'étrier fixé à la partie inférieure du châssis.

Avantageusement, en vue du transport de la machine, il est prévu des moyens de blocage du système de support et de suspension comprenant une plaque munie de deux rebords aptes à venir se clipper sur les deux branches de chaque élément élastique, afin d'éviter toute possibilité d'écartement de celles-ci.

La suppression de l'effet de ressort des étriers assure le maintien des organes de pression dans le fond des évidements des éléments d'appui, et par suite, le blocage de la cuve par rapport au châssis.

Selon une autre de ses caractéristiques l'invention concerne également des moyens de montage du système comportant une pièce possèdant un corps allongé dont une extrémité se termine par un berceau de forme complémentaire de celle de la partie inférieure d'un élément d'appui, ce corps comportant deux gorges longitudinales de guidage qui, ménagées dans deux faces extérieures opposées du corps, débouchent dans la partie formant berceau.

Il est procédé tout d'abord à l'engagement de cette pièce entre deux organes de pression, de telle sorte que ceux-ci prennent appui dans le fond des gorges aux extrémités de celles-ci opposées au berceau, ce dernier étant tourné vers le haut. Lorsque les différents organes de pression sont tous équipés, il est procédé à l'engagement des différents éléments d'appui dans les berceaux des pièces de montage correspondantes. Sous l'effet de la gravité, les pièces de montage se déplacent vers le bas, avec glissement des organes d'appui dans les gorges et enfin transfert de ceux-ci dans les évidements des éléments d'appui. Les pièces de montage sont alors totalement désolidarisées des organes de pression et peuvent être utilisées pour un montage sur une autre machine.

Cette solution permet de réaliser la mise en place des pièces de montage sur les différents organes de pression, puis, au cours d'une seule opération, le montage de tous les éléments d'appui entre les organes de pression.

Selon une autre caractéristique de l'invention, les évidements de chaque élément d'appui sont prolongés vers le haut par deux rainures avec interposition entre chaque évidement et la rainure correspondante d'une butée amovible.

Il est intéressant d'équiper de la sorte au moins les éléments d'appui situés à l'arrière de la machine à laver. Il est ainsi possible, lors d'une intervention sur la cuve ou sur le moteur de la machine, de déplacer vers le bas l'extrémité arrière de la cuve, après retrait des butées amovibles, de telle sorte que les organes de pression soient en appui non pas dans les évidements qui leur sont destinés, mais en partie haute des rainures prolongeant ceux-ci.

Après dégagement des éléments supports situés à l'avant ou à l'arrière de la machine, il est possible de faire pivoter la cuve vers l'avant ou l'arrière respectivement, ce mouvement étant rendu possible du fait de l'abaissement du centre de rotation utilisé.

Ce système de support et d'amortissement est également très intéressant pour la réalisation de roulettes de chariots ou similaires permettant un montage de celles-ci à l'aide d'un nombre réduit de pièces, avec possibilité de suspension facilitant le roulement sur un sol inégal ainsi que le franchissement de petits obstacles. Outre sa simplicité, ce système est également intéressant par sa fiabilité. En effet, contrairement aux chariots habituels dont les axes des roulettes subissent rapidement des détériorations, notamment en raison d'une accumulation de corps étrangers, un chariot équipé d'un tel système possède un fonctionnement extrêmement constant dans le temps, puisqu'il n'est pas perturbé par les corps étrangers, ni par l'humidité, en cas d'utilisation à l'extérieur d'un bâtiment.

Avantageusement, afin de favoriser le roulement et le centrage des organes d'appui dans le fond des surfaces en creux, chaque organe d'appui présente une extrémité intégrée ou constituée par un embout rapporté, de forme conique, de même pente que celle de la surface

6

conique lui servant d'appui.

Pour améliorer encore le fonctionnement, chaque roulette est équipée d'un roulement disposé soit entre le bandage de la roulette et les flasques de celle-ci dans lesquels sont ménagées les surfaces en creux, soit à l'intérieur d'un embout conique monté en bout d'un organe d'appui.

De toute façon, l'invention sera bien comprise à l'aide de la description qui suit en référence au dessin schématique annexé représentant, à titre d'exemples non limitatifs, plusieurs formes d'exécution de ce système de support et d'amortissement :

Figure 2 est une vue en perspective d'une machine à laver équipé de ce système, dont la partie avant est partiellement arrachée ;

Figure 3 est une vue de détail d'un élément de support et de suspension ;

Figure 4 est une vue en perspective de la pièce de montage d'un élément d'appui entre deux organes de pression ;

Figure 5 est une vue en perspective, en position montée et verrouillée, de deux organes de pression sur un élément d'appui ;

Figure 6 est une vue en perspective d'une machine à laver à encastrer ;

Figure 7 est une vue de la partie supérieure de la machine de figure 6 ;

Figure 8 est une vue de côté d'une machine à laver en position basculée de la cuve ;

Figure 9 est une vue en plan d'un ensemble de supports et de suspension de la machine de figure 8 ;

Figure 10 est une vue en coupe de cet ensemble selon la ligne 10-10 de figure 9 ;

Figure 11 est une vue très schématique en coupe montrant différentes formes de réalisation d'éléments d'appui ;

Figure 12 est une vue en coupe transversale d'une variante d'exécution d'un ensemble de support et d'amortissement ;

Figures 13 à 15 sont trois vues correspondant à l'application de ce système à la réalisation d'une roulette équipant un chariot ;

Figure 16 est une vue en perspective d'un système de montage d'une roulette ;

Figure 17 est une vue en perspective éclatée d'une première forme d'exécution du système de figure 16 ;

Figure 18 est une vue en coupe transversale d'une seconde forme d'exécution du système de figure 16.

Dans la machine à laver représentée à la figure 2, la cuve (12) est équipée, à sa partie inférieure, de quatre pattes (13) tournées vers le bas, dont chacune porte, à son extrémité inférieure, un élément d'appui (14) possèdant deux évidements coniques (15) ménagés dans deux parois opposées. Sur la partie inférieure du châssis, ou socle (16), est fixé un élément (17) en forme d'étrier, réalisé en une matière élastiquement déformable, dont les extrémités sont équipés d'embouts (18) coaxiaux.

Comme il ressort du dessin, les surfaces évidées (15) sont sensiblement perpendiculaires à l'axe de rotation (19) du tambour, tandis que les organes de pression (18) agissent horizontalement, parallèlement à l'axe du tambour.

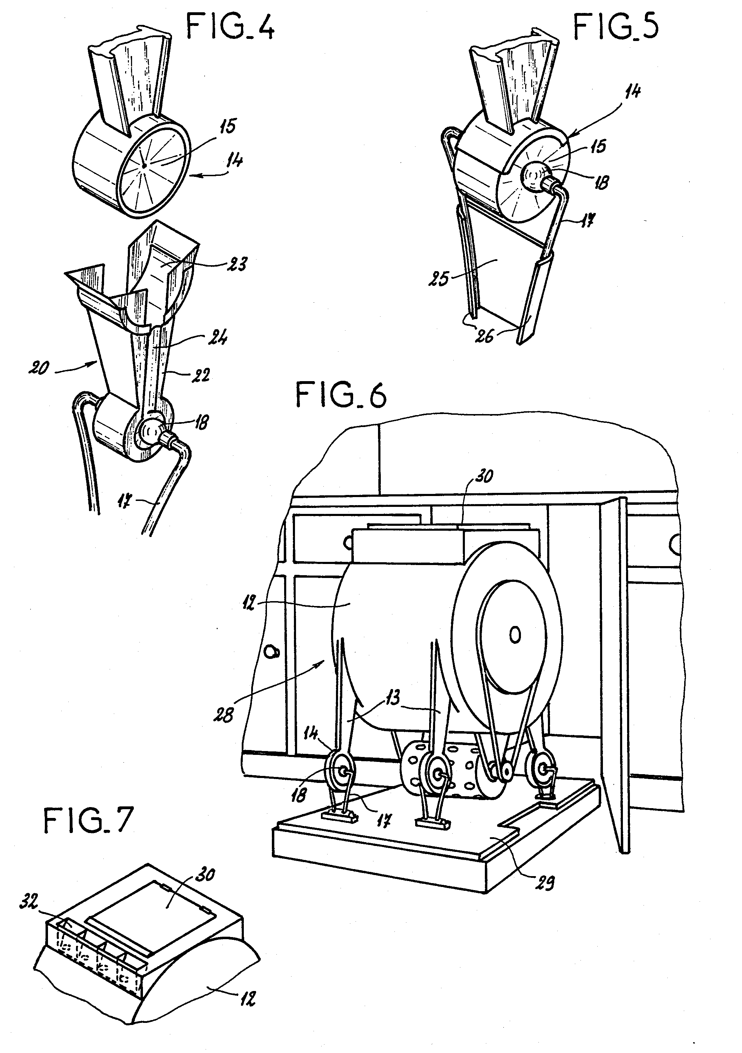

Pour des raisons de simplicité, l'assemblage des éléments d'appui (14) entre les organes de pression (18) est réalisé à l'aide d'une pièce de montage (20) comme montré à la figure 4, cette pièce de montage comporte un corps allongé (22) dont une extrémité (23) se termine par un berceau de forme complémentaire de celle de la partie inférieure d'un élément d'appui (14). Le corps (22) présente, en outre, deux gorges longitudinales (24) débouchant dans les faces extérieures de deux parois opposées du corps (22).

D'un point de vue pratique, il est tout d'abord procédé à l'engagement des deux organes de pression (18) d'un étrier (17) dans les gorges (24) d'une pièce (20) de manière à prendre appui au fond de celles-ci, le berceau étant tourné vers le haut. Lorsque les quatre étriers (17) sont équipés de pièces de montage, l'ensemble de la cuve est déplacé vers le bas, mouvement au cours duquel les éléments d'appui (14) s'engagent dans les berceaux (23), puis au cours duquel la pièce de montage (20) est déplacée vers le bas, jusqu'à ce que les organes de pression (18) échappant aux gorges (24) tombent dans les évidements (15) de l'élément (14).

Il est également prévu un système de verrouillage des étriers (17), représenté à la figure 5, utilisé en période de transport de la machine. Ce système comprend une plaque (25) limitée par des ailes (26) de même inclinaison que les branches de l'étrier (17), de manière

8

à venir se clipper sur celles-ci pour empêcher leur écartement élastique et assurer de ce fait le blocage des organes de pression dans le fond des évidements (15) de l'élément (14).

Les figures 6 et 7 du dessin schématique annexé, représentent une machine à laver (28) destinée à être encastrée dans un meuble. Le montage est réalisé sans bâti, la cuve étant simplement posée sur un socle (29) avec interposition du système de support et d'amortissement conforme à l'invention.

Dans ce cas, la trappe (30) d'accès au tambour et les conduits (32) permettant le remplissage en produits de lavage et de rinçage, sont ménagés directement sur la cuve (12). Le tableau de commande peut, pour sa part, être soit monté directement sur la cuve (12), soit placé à distance, sur le meuble dans lequel est encastrée la machine.

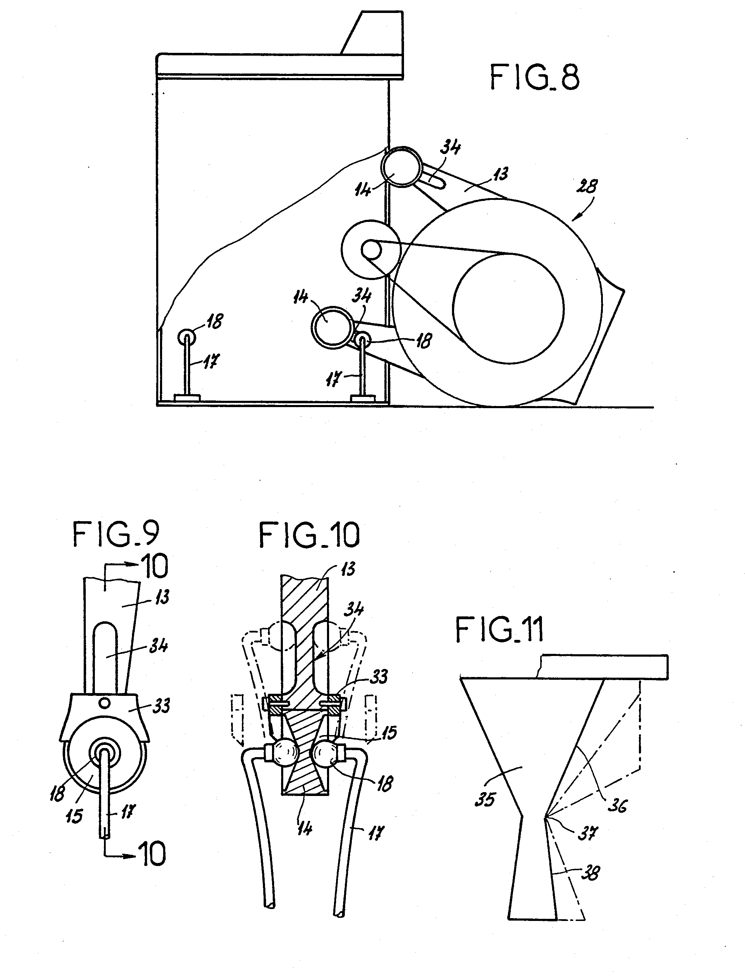

Dans la forme d'exécution représentée aux figures 9 et 10, chaque évidement (15) servant à l'appui d'un organe de pression (18) est limité vers le haut par une butée amovible (33).

Cet évidement est prolongé vers le haut, et au-delà de la butée amovible (33) par une rainure (34).

Ceci permet, en cas d'intervention sur la machine, de retirer les butées (33), comme montré à la figure 10, puis en exerçant une pression verticale sur la cuve, de faire passer les organes de pression (18), des évidements (15) dans les rainures (34) prolongeant ceux-ci vers le haut. Il est ainsi réalisé l'abaissement de la partie postérieure de la cuve.

Comme montré à la figure 8, après libération des éléments d'appui (14) situés à l'avant de la cuve, celle-ci peut alors basculer vers l'arrière par rotation autour des organes de pression (18) en appui à l'extrémité supérieure des rainures (34).

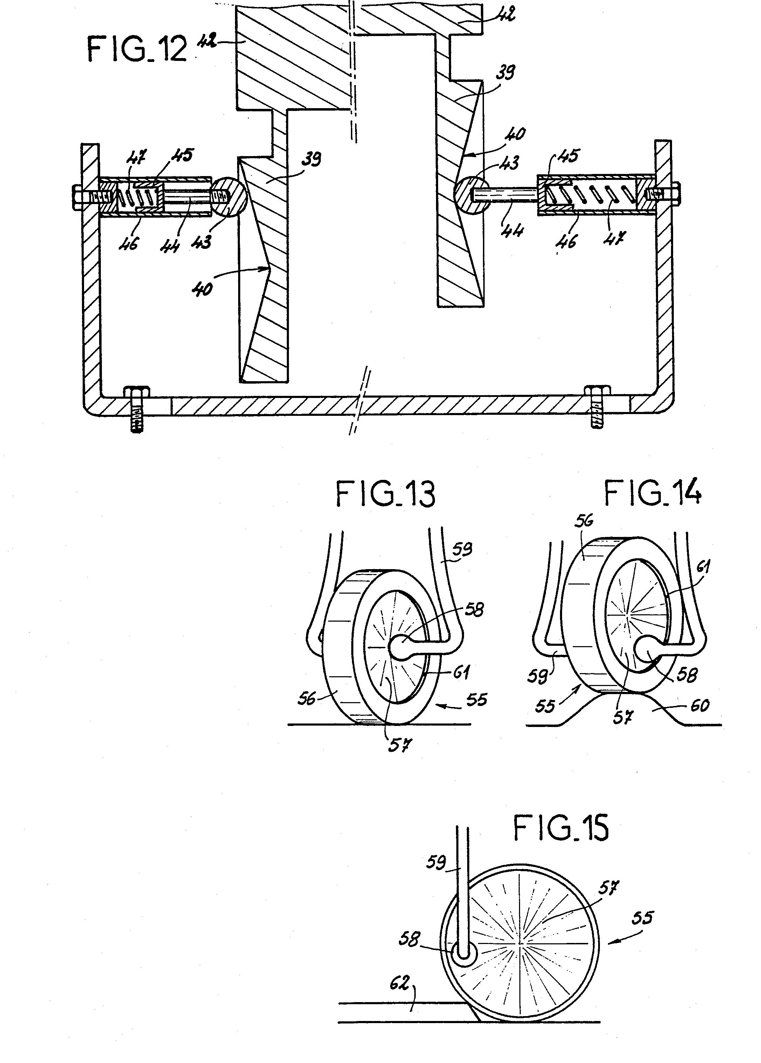

La figure 11 du dessin schématique annexé représente plusieurs formes d'éléments d'appui (35). Ceci permet de constater que, notamment quand le mouvement à amortir est linéaire et vertical, il est possible que la pente de la piste (36) située au-dessus du point d'équilibre (37) soit plus inclinée par rapport à la verticale que celle du tronçon (38) située au-dessous du point d'équilibre dont l'inclinaison peut aller pour sa part jusqu'à la verticale.

La figure 12 est une variante de réalisation de ce système de support et d'amortissement, dans lequel chaque élément d'appui

9

(39) ne comporte qu'une surface en creux (40), étant entendu que deux éléments (39) doivent être montés en opposition à une distance plus ou moins importante l'un de l'autre, ces deux éléments (39) étant tous deux solidaires de la pièce (42).

Les deux organes de pression (43), associés aux deux éléments d'appui (39) sont montés chacun à l'extrémité de la tige (44) d'un piston (45) coulissant dans un cylindre (46), sur lequel une pression élastique est exercée par un ressort (47).

La partie droite du dessin représente le système dans sa position d'équilibre, l'embout (43) étant en appui dans le fond de l'évidement (40). Dans la partie gauche de la figure 12, une contrainte verticale vers le bas a été exercée sur la pièce (42) se traduisant par un déplacement relatif vers le haut de l'embout (43) dans l'évidement (40), grâce à la compression du ressort (47). L'effet de détente du ressort (47) va ramener l'embout (43) dans le fond de l'évidement (40) lorsque la contrainte verticale aura cessé d'être exercée sur la pièce (42).

Les figures 13 à 15 représentent un autre mode de mise en oeuvre de ce système, dans lequel chaque élément d'appui (55) est constitutif de la roulette ou roue d'un chariot. Dans ce cas, chaque élément d'appui (55) est de forme générale circulaire, sa périphérie pouvant recevoir le bandage (56) de la roulette, et présente, dans chacune de ses faces, un évidement (57) de forme conique dont le point le plus profond est central. Les organes de pression (58), associés à chaque évidement (57), sont constitués par les extrémités d'un fil élastique (59) en forme d'étrier, solidaire du corps du chariot non représenté au dessin.

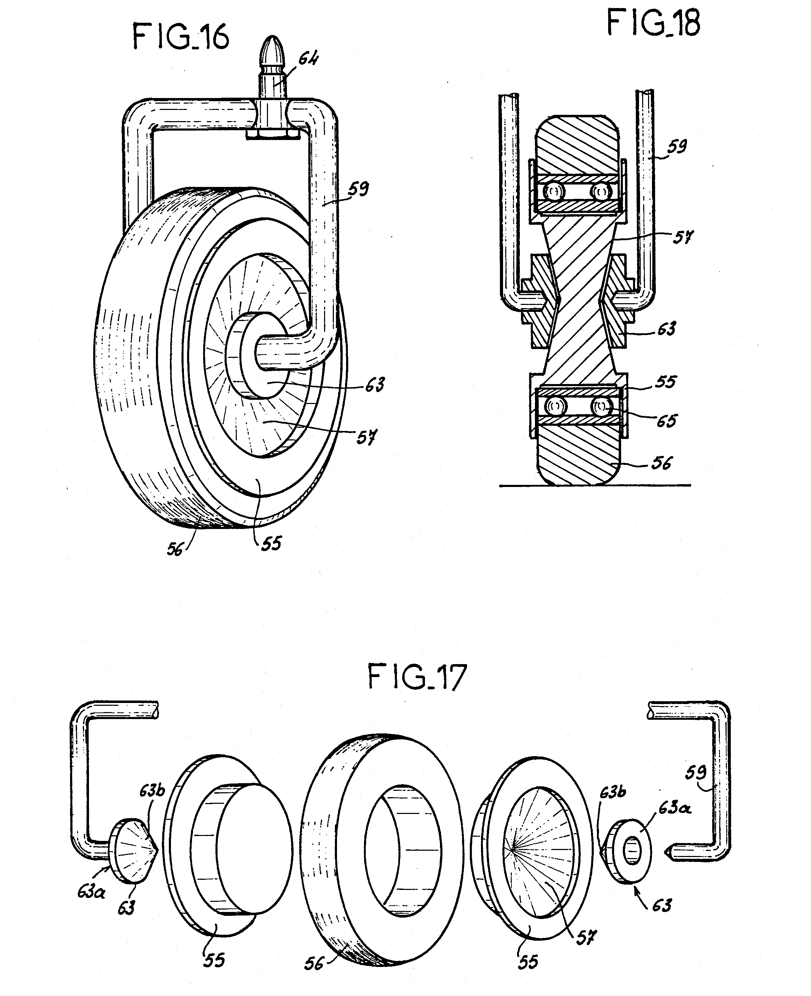

D'un point de vue pratique, lorsque le chariot roule sur un sol plan, les organes de pression (58) sont en appui dans la partie centrale des évidements (57). Lorsque l'une des roues rencontre un obstacle (60), la contrainte exercée sur celle-ci se traduit par un déplacement vers le haut de la roulette, comme montré à la figure 15, les embouts (58) prenant alors appui en-dessous du centre de l'évidement (57).

Dès que l'obstacle est passé, le rappel élastique exercé par les branches (59) ramène les embouts (58) dans le fond de l'évidement (57).

Le phénomène est exactement le même lorsque l'une des

10

roues rencontre un obstacle tel qu'une légère marche (62), le mouvement relatif des embouts (58) et des évidements (57) se faisant par déplacement des embouts (58) en avant du centre des évidements (57), comme montré à la figure 16, avant retour de ceux-ci en position centrale après que la roue ait franchi la dénivellation (62).

Afin d'éviter que les embouts (58) échappent aux évidements (57), ceux-ci sont délimités par un rebord périphérique saillant (61).

La figure 16 représente un système dans lequel les organes d'appui sur les surfaces délimitant les évidements coniques (57), sont constitués par des embouts (63) dont la surface d'appui contre le fond de chaque évidement (57) est conique, de même conicité que la surface (57). Les embouts (63) sont montés aux extrémités des branches (59) d'une pièce en forme d'étrier, dont la partie centrale, décalée par rapport au plan des branches de l'étrier, est équipée d'un pivot vertical (64) permettant un montage articulé sur un chariot.

Dans la forme d'exécution représentée à la figure 17, le système comprend deux flasques (55) formant cuvettes, montés dans un bandage (56). Les embouts (63) sont équipés de roulements, non représentés, assurant une bonne rotation entre la partie (63a) fixée à l'extrémité d'une branche de l'étrier, et la partie (63b) présentant une surface conique. Dans ce cas, les flasques (55) pourraient également faire partie intégrante du bandage (56).

Dans la forme d'exécution représentée à la figure 18, chaque embout conique (63), monté à l'extrémité d'une branche de l'étrier, est monolithique, tandis qu'un roulement (65) est interposé entre les flasques (55) dans lesquels sont ménagées les cuvettes (57), et le bandage (56).

Les embouts coniques des organes d'appui peuvent convenir tout aussi bien dans le cas de roulettes que dans le cas de système de support et d'amortissement de machines à laver.

Dans tous les cas, cet agencement permet, dans un déplacement circulaire de l'ensemble à amortir, de faire couler l'embout conique sur la partie inclinée de la surface d'appui en creux.

Dans le cas du démarrage d'une machine à laver, le déséquilibre dû à la montée en fréquence (vitesse moteur) et le déplacement créé par le balourd se traduiront par un déplacement en diagonale de chaque pièce conique, ce qui limitera le roulement de ladite pièce, assurant ainsi un freinage du mouvement. Lorsque le balourd sera stabilisé, les pièces coniques décriront un mouvement circulaire à peu près régulier.

Comme il ressort de ce qui précède, l'invention apporte une grande amélioration à la technique existante en fournissant un système de support et d'amortissement de pièces mobiles de conception simple, très pratiques de mise en oeuvre et de fonctionnement efficace dont l'application peut être envisagée dans des domaines extrêmement variés.

12
## REVENDICATIONS

1. - Système de support et d'amortissement des mouvements d'une pièce, du type comprenant au moins un élément (14) solidaire de la pièce à supporter ou destiné à supporter ladite pièce, comportant au moins une face (15) profilée en creux située sensiblement dans le plan dans lequel la pièce est susceptible de se déplacer, sur laquelle est en appui élastique un organe (18) solidaire, respectivement, de la pièce ou du châssis, la force d'appui de cet organe dans la surface en creux étant sensiblement perpendiculaire à la direction dans laquelle la pièce est susceptible de se déplacer par rapport au châssis, caractérisé en ce que chaque face d'appui d'un organe poussé élastiquement est constituée par une surface conique ou une portion de surface conique.

2. - Système selon la revendication 1, caractérisé en ce que les organes de pression (18) constituent les extrémités d'un élément élastique (17) en forme d'étrier, tel qu'un fil ou une lame ressort.

3. - Système selon l'une quelconque des revendications 1 et 2, caractérisé en ce que chaque face en creux (15, 40, 57) ménagée dans un élément d'appui est circulaire, et délimitée par une surface conique.

4. - Système selon l'une quelconque des revendications 1 à 3, caractérisé en ce que chaque face en creux (15, 57) d'un élément d'appui est limitée sur tout ou partie de sa périphérie par un rebord (33, 63) fixe ou amovible évitant que, sous l'effet d'une contrainte supérieure aux contraintes de valeur acceptable, les organes de pression échappent à la partie en creux de l'élément d'appui.

5. - Système selon l'une quelconque des revendications 1 et 2, caractérisé en ce que, dans la mesure où le mouvement à amortir ne correspond qu'à une direction, par exemple verticale, l'évidement de chaque élément d'appui est ménagé selon une piste rectiligne.

6. - Système selon la revendication 5, caractérisé en ce que les pentes (36, 38) de la piste, respectivement au-dessus et au-dessous du point le plus en creux (37) correspondant au point d'équilibre, possèdent des inclinaisons différentes, la pente de la zone située au-dessus de ce point étant plus inclinée par rapport à la verticale que la pente de la zone située au-dessous de celui-ci.

7. - Système selon l'une quelconque des revendications 1 à 6, caractérisé en ce que, dans le cas de l'équipement d'une machine à laver, la cuve (12) de celle-ci est équipée, à sa partie inférieure, d'au moins trois pattes (13) tournées vers le bas dont chacune porte, à son extrémité inférieure, un élément d'appui (14) possèdant deux évidements (15) débouchant, dans ses deux faces opposées qui sont situées dans des plans sensiblement perpendiculaires à l'axe de rotation (19) du tambour, servant à l'appui de deux organes de pression (18) coaxiaux et parallèles à l'axe du tambour, solidaires de la partie inférieure (16) du châssis.

8. - Système selon la revendication 7, caractérisé en ce que chaque paire d'organes de pression (18) est constituée par les extrémités d'un élément élastique (17) en forme d'étrier fixé à la partie inférieure (16) du châssis.

9. - Système selon la revendication 8, caractérisé en ce qu'il comporte des moyens de blocage du système de support et de suspension comprenant une plaque (25) munie de deux rebords (26) aptes à venir se clipper sur les deux branches de chaque élément élastique (17), afin d'éviter toute possibilité d'écartement de celles-ci.

10. - Système selon l'une quelconque des revendications 7 à 9, caractérisé en ce qu'il comporte des moyens de montage du système comportant une pièce (20) possèdant un corps allongé dont une extrémité se termine par un berceau (23) de forme complémentaire de celle de la partie inférieure d'un élément d'appui (14), ce corps comportant deux gorges longitudinales de guidage (24) qui, ménagées dans deux faces extérieures opposées du corps, débouchent dans la partie formant berceau.

11. - Système selon l'une quelconque des revendications 7 à 10, caractérisé en ce que les évidements (15) de chaque élément d'appui sont prolongés vers le haut par deux rainures (34), avec interposition entre chaque évidement et la rainure correspondante d'une butée amovible (33).

12. - Système selon l'une quelconque des revendications 1 à 11, caractérisé en ce que chaque organe d'appui présente une extrémité (63) en forme de surface conique, de même conicité que la surface en creux correspondante.

13. - Système selon la revendication 12, caractérisé en ce que, dans la mesure où un organe d'appui comprend un embout (63) rapporté, cet embout est équipé d'un roulement disposé entre sa partie

14

centrale (63a) fixée sur un organe élastique, et sa partie conique (63b) d'appui sur une surface en creux.

14. - Système selon la revendication 12, caractérisé en ce que, dans le cas où les surfaces en creux sont constituées par les flasques (55) d'une roulette, un roulement (65) est interposé entre les flasques et le bandage (56) de la roulette.

1/5

0117824

FIG.1

FIG.2

FIG.3

0117824

FIG_4

15
14

23
20
24
22
18
17

FIG_5

14
15
18
17
25
26

FIG_6

30
12
28
13
14
18
17
29

FIG_7

30
32
12

0117824

FIG. 8

FIG. 9

FIG. 10

FIG. 11

0117824

FIG.12

FIG.13

FIG.14

FIG.15

0117824

FIG.16

FIG.18

FIG.17

Office européen
des brevets

**RAPPORT DE RECHERCHE EUROPEENNE**

0117824
Numéro de la demande

EP 84 42 0012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | GB-A- 877 164 (WESTINGHOUSE ELECTRIC) * Page 2, dernière ligne; page 3, lignes 1-111 * | 1-3,5, 7,8 | D 06 F 37/20 F 16 F 7/08 |
| | --- | | |
| X | DE-A-1 585 595 (ROBERT BOSCH) * Revendication 6 * | 1,2,5 | |
| | --- | | |
| A | GB-A- 625 324 (BRITISH THOMSON-HOUSTON) * Page 8, lignes 91-128 * | 1,2,4, 5,7,8 | |
| | --- | | |
| A | US-A-2 692 681 (DOUGLAS) * Figure 7 * | 1,5,7, 8 | |
| | --- | | |
| A | US-A-3 262 661 (JOHNSON et al.) * Figures * | 7,8 | DOMAINES TECHNIQUES RECHERCHES (Int. Cl. 3) |
| | --- | | |
| A | FR-A-1 518 281 (BORGHI) * Résumé * | 9 | D 06 F F 16 F B 60 B |
| | --- | | |
| A | GB-A-2 085 102 (VYSOKA SKOLA DOPRAVY A SPOJOV) * Revendications * | 1,12 | |
| | --- | | |
| A | FR-A-1 408 824 (HOTCHKISS-BRANDT) | | |
| | --- -/- | | |

Le présent rapport de recherche a été établi pour toutes les revendications

| Lieu de la recherche LA HAYE | Date d'achèvement de la recherche 10-05-1984 | Examinateur D HULSTER E.W.F. |
|---|---|---|

Office européen
des brevets

**RAPPORT DE RECHERCHE EUROPEENNE**

EP 84 42 0012

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-1 143 828 (THERMOR) <br><br> ----- | | |
| | | | **DOMAINES TECHNIQUES RECHERCHES (Int. Cl. ³)** |
| | Le présent rapport de recherche a été établi pour toutes les revendications | | |

| Lieu de la recherche <br> LA HAYE | Date d'achèvement de la recherche <br> 10-05-1984 | Examinateur <br> D HULSTER E.W.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

   & : membre de la même famille, document correspondant

OEB Form 1503. 03.82